# EUROPÄISCHE PATENTSCHRIFT

(11) **EP 2 587 208 B1**
(45) Veröffentlichungstag und Bekanntmachung des Hinweises auf die Patenterteilung: **09.12.2015**
(21) Anmeldenummer: 12187744.3
(22) Anmeldetag: 09.10.2012
(51) Int. Cl.: F41A 9/45, F41F 3/04, B60R 9/00, F41A 23/34, B60R 7/02, F41A 23/42, F41H 7/02

(54) **Militärisches Fahrzeug, Transportbehälter und Verfahren zum Verstauen von Ausrüstungsgegenständen**
Military vehicle, transport container and method for stowing of items of equipment
Véhicule militaire, récipient de transport et procédé de rangement d'objets d'équipement

(30) Priorität: 31.10.2011 DE 102011054963
(43) Veröffentlichungstag der Anmeldung: 01.05.2013
(73) Patentinhaber: Krauss-Maffei Wegmann GmbH & Co. KG, 80997 München (DE)
(72) Erfinder: Mergard, Tino, 34127 Kassel (DE); Freudenstein, Manfred, 34127 Kassel (DE); Schilling, Martin, 34127 Kassel (DE)
(74) Vertreter: Feder Walter Ebert

(56) Entgegenhaltungen:
- DE-U1- 20 214 679
- DE-U1- 29 922 470
- US-A- 6 125 734
- US-A1- 2010 163 330
- KOHLER F: "SCHIESSSICHERHEITSANLAGE FUER DEN RAKETENWERFER MARS", SOLDAT UND TECHNIK, REPORT-VERLAG, FRANKFURT AM MAIN, DE, Bd. 45, Nr. 6, 1. Juni 2002 (2002-06-01), Seiten 35-38, XP001177121, ISSN: 0038-0989
- MOORHEAD S B: "THE LATEST IN SHIP WEAPON LAUNCHERS - THE VERTICAL LAUNCHING SYSTEM", NAVAL ENGINEERS JOURNAL, AMERICAN SOCIETY OF NAVAL ENGINEERS INC. WASHINGTON, US, Bd. 93, Nr. 2, 1. April 1981 (1981-04-01), Seiten 90-96, XP002048251,

## Beschreibung

Die Erfindung betrifft ein militärisches Fahrzeug mit einer Werfereinrichtung, die einen in Elevation richtbaren Höhenrichtteil mit einem Laderaum aufweist, in welchen Werfermunitionskörper einbringbar sind. Ferner betrifft die Erfindung ein Verfahren zum Verstauen von Ausrüstungsgegenständen an einer Werfereinrichtung eines militärischen Fahrzeugs, die einen in Elevation richtbaren Höhenrichtteil mit einem Laderaum aufweist, in welchen Werfermunitionskörper einbringbar sind.

Derartige militärische Fahrzeuge mit einer Werfereinrichtung können als mobiler Raketenwerfer ausgebildet sein. Die Werfereinrichtung eines solchen Fahrzeugs ist in der Regel oberhalb eines Fahrgestells und/oder einer Wanne des Fahrzeugs angeordnet und weist einen in Elevation richtbaren Höhenrichtteil und/oder einen in Azimut richtbaren Seitenrichtteil auf.

Werfereinrichtungen solcher Fahrzeuge sind üblicherweise derart ausgestaltet, dass zum Laden der Werfereinrichtung mehrere sich selbst antreibende Werfermunitionskörper, beispielsweise Raketen, gemeinsam in die Werfereinrichtung eingebracht werden können. Die Werfermunitionskörper können in der gerichteten Werfereinrichtung gezündet und aus der Werfereinrichtung verschossen werden.

Ein militärisches Fahrzeug mit einer Werfereinrichtung, die einen in Elevation richtbaren Höhenrichtteil mit zwei Laderäumen für Werfermunitionskörper aufweist, ist aus der DE 202 14 679 U1 bekannt.

Zwar können derartige Fahrzeuge eine ausreichende Anzahl von Werfermunitionskörpern in der Werfereinrichtung mitführen, im Hinblick auf das Mitführen von Ausrüstungsgegenständen, wie z. B. der persönlichen Schutzausrüstung der Fahrzeugbesatzung, von Werkzeugen, Vorratsrationen oder Zubehör, hat es sich jedoch als nachteilig erwiesen, dass im Innenraum solcher Fahrzeuge, insbesondere im Bereich des Fahrgestells und/oder der Wanne, nur wenig Stauraum zum Verstauen der Ausrüstungsgegenstände zur Verfügung steht. Auch die Installation von als Rüstsätzen und/oder Geräten ausgebildeten Ausrüstungsgegenständen an dem militärischen Fahrzeug gestaltet sich aufgrund des geringen Platzangebots im Inneren des Fahrzeugs als schwierig. Zu berücksichtigen ist ferner, dass es häufig nicht möglich ist, Ausrüstungsgegenstände oberhalb des Fahrgestells und/oder der Wanne des Fahrzeugs anzuordnen, da hierdurch der Richtbereich der Werfereinrichtung durch die Ausrüstungsgegenstände eingeschränkt werden kann.

Aufgabe der Erfindung ist es, das Verstauen von Ausrüstungsgegenständen zu ermöglichen, ohne den Richtbereich der Werfereinrichtung zu beeinflussen.

Bei einem militärischen Fahrzeug, insbesondere einem Raketenwerfer, der eingangs genannten Art wird die Aufgabe dadurch gelöst, dass an dem Höhenrichtteil ein Transportbehälter mit einem Stauraum zum Verstauen von Ausrüstungsgegenständen angeordnet ist, wobei der Transportbehälter derart ausgebildet ist, dass er in dem Laderaum aufnehmbar ist.

Der Transportbehälter kann derart an der Werfereinrichtung angeordnet werden, dass er gemeinsam mit dem Höhenrichtteil in Elevation und/oder in Azimut richtbar ist. Durch die Anordnung des Transportbehälters an der richtbaren Werfereinrichtung können Ausrüstungsgegenstände an dem Fahrzeug verstaut werden, ohne den Richtbereich, in welchem die Werfereinrichtung gerichtet werden kann, zu beeinflussen. Der Transportbehälter kann einen geschlossenen Stauraum aufweisen, in welchem die Ausrüstungsgegenstände verstaut und/oder installiert werden können.

Bevorzugt ist der Transportbehälter auswechselbar an dem Höhenrichtteil angeordnet, so dass mit unterschiedlichen Ausrüstungsgegenständen gefüllte Transportbehälter je nach Bedarf an dem Höhenrichtteil angeordnet werden können.

Ferner kann weist der Höhenrichtteil eines derartigen Fahrzeugs einen Laderaum aufweisen, in welchen Werfermunitionskörper einbringbar sind. Bei einem derartigen Höhenrichtteil hat es sich als vorteilhaft erwiesen, wenn der Der Transportbehälter ist derart ausgebildet ist, dass er in dem Laderaum des Höhenrichtteils aufnehmbar ist, so dass der Laderaum des Höhenrichtteils zum Verstauen von Ausrüstungsgegenständen nutzbar gemacht werden kann.

Um einen möglichst großen Bereich des Laderaums der Werfereinrichtung zum Verstauen von Ausrüstungsgegenständen nutzbar zu machen, kann die Außenkontur des Transportbehälters an die Innenkontur des Laderaums angepasst sein.

Bei einem Höhenrichtteil mit einem Laderaum, in welchen ein Munitionsbehälter einbringbar ist, in dem mehrere Werfermunitionskörper anordbar sind, ist der Transportbehälter mit dem Stauraum bevorzugt anstelle des Munitionsbehälters in den Laderaum des Höhenrichtteils einbringbar. Die Werfereinrichtung kann wahlweise mit dem Munitionsbehälter oder dem Transportbehälter beladen werden. Der Transportbehälter kann somit hinsichtlich seiner äußeren Dimensionierung dem Munitionsbehälter entsprechen.

Gemäß einer bevorzugen Ausgestaltung des militärischen Fahrzeugs weist der Höhenrichtteil mindestens zwei Laderäume für Werfermunitionskörper auf, wobei der Transportbehälter in einem der Laderäume aufnehmbar ist. Der Transportbehälter kann wahlweise in einen der Laderäume eingebracht werden, so dass die Laderäume je nach Bedarf mit Werfermunitionskörpern oder dem Transportbehälter bestückt werden können. Es ist möglich, einen Laderaum mit Werfermunitionskörpern und einen Laderaum mit dem Transportbehälter zu laden, so dass immer noch Werfermunitionskörper aus der Werfereirichtung verschossen und zugleich zusätzliche Ausrüstungsgegenstände mitgeführt werden können.

Bevorzugt weist der Transportbehälter eine insbesondere quaderförmige Außenhülle zur Begrenzung des Stauraums auf. Durch die Außenhülle kann der Stauraum abgeschlossen werden. Die Außenhülle kann aus einem Leichtmetall, beispielsweise aus Aluminium, oder aus einem Verbundwerkstoff ausgebildet sein. Ferner ist es möglich, den Transportbehälter wettergeschützt, regendicht und/oder staubdicht auszugestalten. Bei einer quaderförmigen Außenhülle des Transportbehälters ergibt sich der Vorteil, dass der Transportbehälter grundsätzlich stapelbar ist und dann, wenn er nicht an dem militärischen Fahrzeug angeordnet ist, in einem Stapel mit anderen Transportbehältern gelagert werden kann.

Beim Verschießen von Werfermunitionskörpern, beispielsweise von Raketen, kann sich an einer in Flugrichtung des Werfermunitionskörpers hinteren Seite des startenden Werfermunitionskörpers ein Abgasstrahl bilden. Um die Einwirkung des Abgasstrahls auf die Ausrüstungsgegenstände zu verringern, weist der Transportbehälter bevorzugt eine Schutzwand zum Schutz des Stauraums vor dem Abgasstrahl der Werfermunitionskörper auf. Durch eine Schutzwand kann verhindert werden, dass sich Ausrüstungsgegenstände in dem Transportbehälter beim Verschuss der Werfermunitionskörper entzünden können oder beschädigt werden. Die Schutzwand kann an einer Stirnseite des Stauraums angeordnet sein. Auf diese Weise kann eine Stirnseite des Transportbehälters, welche in Richtung des Abgasstrahls gerichtet ist, geschützt werden.

Im Hinblick auf die Lagerung der Ausrüstungsgegenstände innerhalb des Transportbehälters hat es sich ferner als vorteilhaft erwiesen, wenn in dem Transportbehälter eine Trennwand zur Unterteilung des Stauraums vorgesehen ist. Durch die Trennwand kann der Stauraum in mehrere Bereiche unterteilt werden. Ferner kann das Verrutschen der Ausrüstungsgegenstände von einem Bereich des Stauraums in einen anderen Bereich des Stauraums verhindert werden.

Um den Zugang zu dem Stauraum zu verbessern, hat es sich als vorteilhaft erwiesen, wenn der Transportbehälter eine schließbare Öffnung aufweist. Die Öffnung kann mittels einer Tür verschließbar sein. Besonders vorteilhaft ist es, wenn der Transportbehälter mehrere Öffnungen aufweist, so dass der Zugang zum Stauraum in verschiedenen Bereichen des Stauraums ermöglicht wird. Vorteilhafterweise ist eine Öffnung derart an dem Transportbehälter angeordnet, dass sie auch dann zugänglich ist, wenn der Transportbehälter an der Werfereinrichtung angeordnet bzw. in den Laderaum der Werfereinrichtung eingebracht ist.

Der Transportbehälter kann aufgrund der in ihm verstauten Ausrüstungsgegenstände ein derart großes Gewicht aufweisen, dass er durch die Fahrzeugbesatzung nicht manuell verladen werden kann. Um das Verladen des Transportbehälters zu ermöglichen, ist gemäß einer vorteilhaften Ausgestaltung der Erfindung an dem Fahrzeug eine Verladevorrichtung zum Verladen des Transportbehälters vorgesehen. Mit einer Verladevorrichtung, insbesondere nach Art eines Krans, können solche Transportbehälter, welche ein für die manuelle Verladung zu großes Gewicht aufweisen, in die Werfereinrichtung verbracht werden. Besonders vorteilhaft ist es in diesem Zusammenhang, wenn die Verladevorrichtung an der Werfereinrichtung, insbesondere an dem Höhenrichtteil, angeordnet ist, wodurch ein kompakter Aufbau des Fahrzeugs ermöglicht wird.

Im Hinblick auf das Verladen des Transportbehälters ist es außerdem vorteilhaft, wenn der Transportbehälter ein, insbesondere an einer Oberseite des Stauraums angeordnetes, Verbindungselement zur Verbindung mit der Ladevorrichtung aufweist. Über das Verbindungselement kann eine lösbare Verbindung mit einem Verbindungselement der Verladevorrichtung hergestellt werden. Das Verbindungselement kann nach Art einer Öse ausgebildet sein, in welche ein Haken der Verladevorrichtung eingreifen kann. Die Öse kann durch eine Stange an der Außenkontur des Transportbehälters gebildet werden. Ferner können an der Außenseite des Transportbehälters schlaufenförmige Transportösen vorgesehen sein, welche, insbesondere an den Kanten des Transportbehälters angeordnet sind.

Durch das Einbringen der Ausrüstungsgegenstände in den Transportbehälter kann sich der Schwerpunkt des Transportbehälters derart verändern, dass der Transportbehälter beim Verladen mit der Verladevorrichtung in eine Schräglage geraten kann. Infolgedessen kann das Verladen des mit Ausrüstungsgegenständen gefüllten Transportbehälters erschwert werden. Es hat sich daher als vorteilhaft erwiesen, wenn der Transportbehälter eine Einstellvorrichtung zur Einstellung des Schwerpunkts des Transportbehälters aufweist. Über die Einstellvorrichtung kann der Schwerpunkt des gefüllten Transportbehälters an den Schwerpunkt eines nicht gefüllten Transportbehälters angepasst werden.

Vorteilhaft ist es, wenn die Einstellvorrichtung ein bewegbares Justiergewicht aufweist. Mittels des bewegbaren Justiergewichts kann ein Gegengewicht zu dem Gewicht der Ausrüstungsgegenstände bereitgestellt werden, so dass die Gewichtsverteilung innerhalb des Transportbehälters ausgeglichen werden kann. Der gefüllte Transportbehälter kann mittels des Justiergewichts ausbalanciert werden.

Besonders bevorzugt ist das Justiergewicht entlang einer Längsrichtung des Transportbehälters, insbesondere mittels eines Antriebs, bewegbar. Somit lässt sich die Gewichtsverteilung in der Längsrichtung beeinflussen. Das Justiergewicht kann linear bewegbar sein. Ferner kann eine Führungsvorrichtung zur Führung des Justiergewichts vorgesehen sein, welche innerhalb des Transportbehälters oder an der Außenkontur des Transportbehälters angeordnet ist.

Gemäß einer weiteren vorteilhaften Ausgestaltung der Erfindung ist in dem Transportbehälter eine elektrische Ausrüstung, insbesondere ein Stromerzeuger angeordnet, welche mit der Werfereinrichtung über eine Schnittstelle verbindbar ist. Über eine elektrische Ausrüstung können an dem Fahrzeug und/oder der Werfereinrichtung zusätzliche Funktionen bereitgestellt werden. Ein Stromerzeuger kann zur Bereitstellung zusätzlicher elektrischer Energie in dem elektrischen Fahrzeug und/oder der Werfereinrichtung genutzt werden. Die Verbindung der elektrischen Ausrüstung mit der Werfereinrichtung kann über eine Schnittstelle erfolgen, welche manuell verbunden wird.

Bei einem eingangs genannten Verfahren zum Verstauen von Ausrüstungsgegenständen an einer in Elevation richtbaren Werfereinrichtung eines militärischen Fahrzeugs, die einen in Elevation richtbaren Höhenrichtteil mit einem Laderaum aufweist, in welchen Werfermunitionskörper einbringbar sind, wird die Aufgabe dadurch gelöst, dass ein Transportbehälter, der einen Stauraum zum Verstauen von Ausrüstungsgegenständen aufweist, an dem Höhenrichtteil angeordnet wird, wobei der Transportbehälter in dem Laderaum aufgenommen wird.

Die Ausrüstungsgegenstände können zunächst in einen insbesondere geschlossenen Stauraum des Transportbehälters eingebracht werden. In einem weiteren Schritt kann der Transportbehälter derart an dem Höhenrichtteil der Werfereinrichtung angeordnet werden, dass er gemeinsam mit dem Höhenrichtteil in Elevation und/oder in Azimut gerichtet werden kann. Der Richtbereich der Werfereinrichtung wird somit durch den Transportbehälter nicht beeinflusst.

Gemäß einer vorteilhaften Ausbildung des Verfahrens wird der Transportbehälter der Werfereinrichtung durch eine Verladevorrichtung zugeführt. Es ist nicht erforderlich, den Transportbehälter manuell zu verladen. Die Verladevorrichtung kann nach Art eines Krans ausgestaltet sein.

Im Hinblick auf den Verladevorgang hat es sich ferner als Vorteilhaft erwiesen, wenn der Schwerpunkt des Transportbehälters mit einer Einstellvorrichtung eingestellt wird. Mittels der Einstellvorrichtung kann der Transportbehälter vor dem Verladen ausbalanciert werden. Der Schwerpunkt des Transportbehälters kann mittels der Einstellvorrichtung derart eingestellt werden, dass der Transportbehälter beim Verladen nicht verkippen und/oder beim Einbringen in den Laderaum und/oder beim Entfernen aus dem Laderaum nicht verkanten kann. Nach dem Einbringen des Transportbehälters in einen Laderaum des Höhenrichtteils der Werfereinrichtung kann der Transportbehälter mittels einer Verriegelungsvorrichtung der Werfereinrichtung verriegelt werden. Die Verriegelung kann mechanisch erfolgen.

Neben den vorstehen beschriebenen vorteilhaften Ausgestaltungen des Verfahrens können auch die im Zusammenhang mit dem militärischen Fahrzeug beschriebenen vorteilhaften Ausgestaltungen bei dem Verfahren zur Anwendung kommen.

Weitere Vorteile und Einzelheiten des militärischem Fahrzeugs, des Transportbehälters sowie des Verfahrens sollen im Folgenden anhand der in den Figuren dargestellten Ausführungsbeispiele erläutert werden. In diesen zeigt:
- Fig. 1: ein militärisches Fahrzeug in einer Draufsicht;
- Fig. 2: das militärische Fahrzeug aus der Fig. 1 in einer Seitenansicht;
- Fig. 3: das militärische Fahrzeug aus der Fig. 1 in einer Rückansicht;
- Fig. 4: eine erste Ausgestaltung eines Transportbehälters;
- Fig. 5: eine zweite Ausgestaltung eines Transportbehälters;
- Fig. 6: das militärische Fahrzeug aus der Fig. 1 in perspektivischen Darstellungen zur Veranschaulichung des Verladevorgangs.

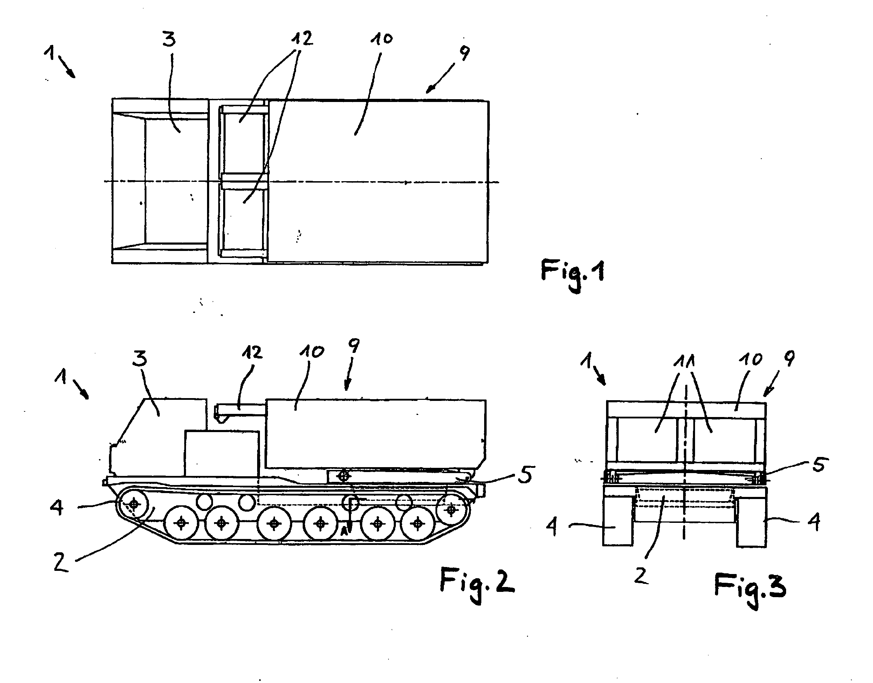

In den Fig. 1-3 ist ein als Raketenwerfer ausgebildetes militärisches Fahrzeug 1 dargestellt. Das Fahrzeug 1 weist ein Fahrgestell 2 mit zwei Ketten 4 auf. Im vorderen Bereich des Fahrzeugs 1 ist oberhalb des Fahrgestells 2 ein Führerhaus 3 vorgesehen. Ebenfalls oberhalb des Fahrgestells 2 ist im Bereich hinter dem Führerhaus 3 eine Werfereinrichtung 9 angeordnet.

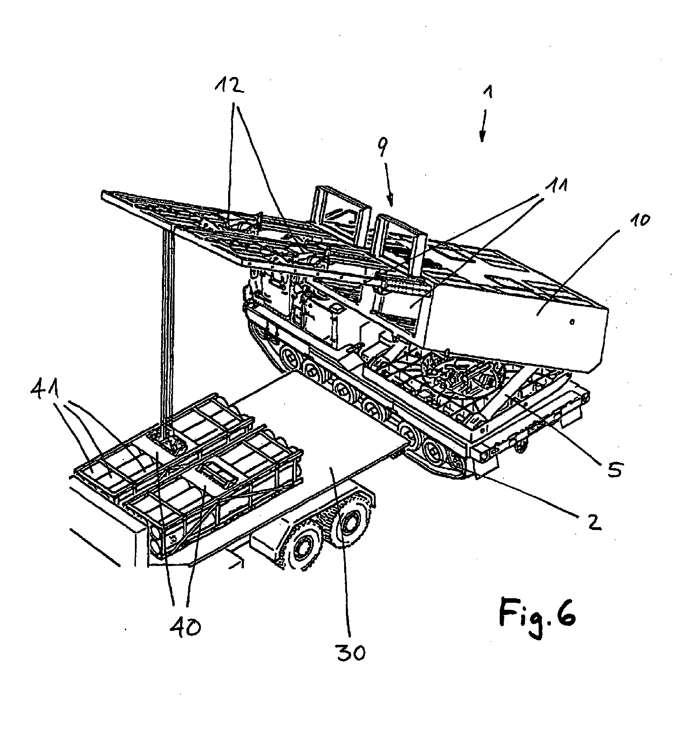

Die Werfereinrichtung 9 weist einen Höhenrichtteil 10 sowie eine Richtvorrichtung 5 zum Richten des Höhenrichtteils 10 in Elevation und Azimut auf. Über die Richtvorrichtung 5 ist die Werfereinrichtung 9 mit dem Fahrgestell 2 verbunden. Mittels der Richtvorrichtung 5 kann der Höhenrichtteil 10 aus der in der Fig. 2 dargestellten Transportstellung in eine gerichtete Stellung überführt werden, in welcher der Höhenrichtteil 10 in Elevation und/oder in Azimut gerichtet ist, vgl. Fig. 6. In der gerichteten Stellung des Höhenrichtteils 10 können als Raketen ausgebildete Werfermunitionskörper aus der Werfereinrichtung 9 verschossen werden.

Wie ferner in der Fig. 3 ersichtlich, weist der Höhenrichtteil 10 der Werfereinrichtung 9 zwei als Ladeschächte ausgebildete Laderäume 11 für Werfermunitionskörper nach Art einer Doppelkammer auf, in welche Munitionsbehälter 40 eingebracht werden können. Geeignete Munitionsbehälter 40, die offen ausgestaltet sind und mehrere Lagerplätze 41 für Werfermunitionskörper aufweisen, die innerhalb einer fachwerkartigen Hülle angeordnet sind, sind in der Fig. 6 dargestellt. Die Munitionsbehälter 40 können über eine Verladevorrichtung 12 der Werfereinrichtung 9 verladen werden, wie weiter unten näher erläutert werden wird.

Um zusätzliche Ausrüstungsgegenstände, wie beispielsweise die persönliche Schutzausrüstung der Fahrzeugbesatzung, Werkzeuge, Vorratsrationen, Zubehörteile, Rüstsätze oder Geräte, an dem in den Fig. 1-3 dargestellten militärischen Fahrzeug 1 zu verstauen, kann an dem in Elevation richtbaren Höhenrichtteil 10 ein Transportbehälter 20 mit einem Stauraum 21 angeordnet werden. Der Transportbehälter 20 ist gemeinsam mit dem Höhenrichtteil 10 in Elevation und in Azimut richtbar, was den Vorteil mit sich bringt, dass sich aufgrund des Transportbehälters 20 keine Beeinflussung des Richtbereichs der Werfereinrichtung 9 ergibt.

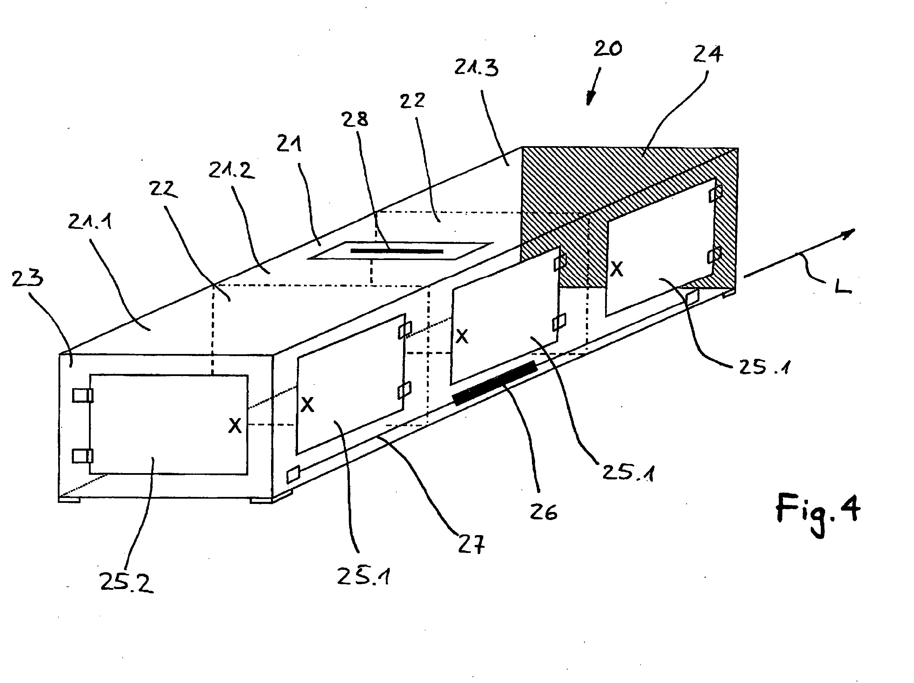

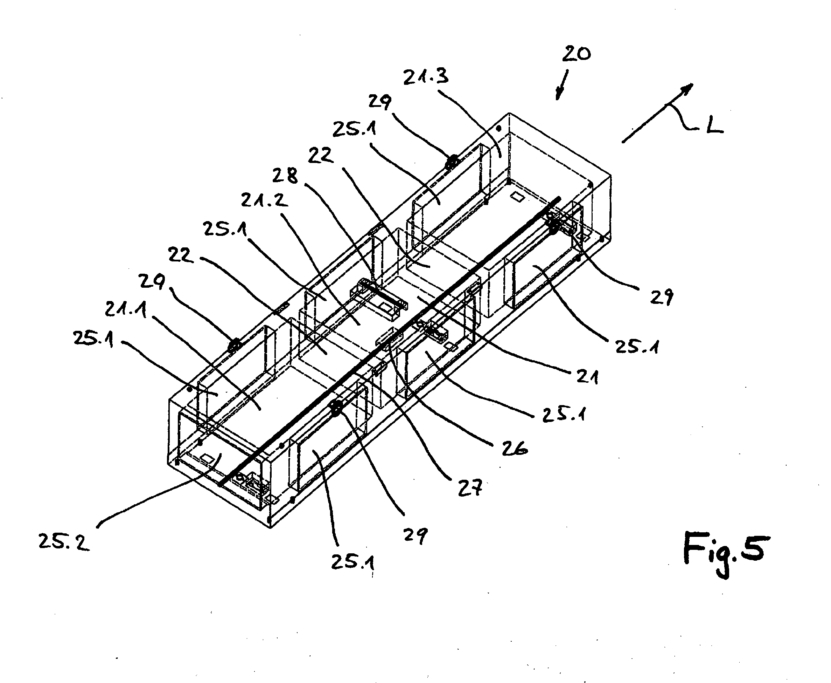

Zwei unterschiedliche Ausführungsbeispiele eines als Transportcontainer ausgebildeten Transportbehälters 20 sind in der Fig. 4 und Fig. 5 dargestellt, und sollen nachfolgend näher beschrieben werden.

Die äußere Form des Transportbehälters 20 gemäß Fig. 4 und Fig. 5 ist derart ausgebildet, dass er anstelle eines Munitionsbehälters 40 in einen der beiden Laderäume 11 der Werferereinrichtung 9 eingeführt werden kann. Die Laderäume 11 der Werfereinrichtung 9 können wahlweise mit einem Munitionsbehälter 40 oder einem Transportbehälter 20 beladen werden. Beispielsweise kann ein Munitionsbehälter 40 aus einem Laderaum 11 der Werfereinrichtung 9 entfernt und gegen einen Transportbehälter 20 ausgetauscht werden, falls zusätzlicher Stauraum in dem Fahrzeug 1 erforderlich ist. Optional ist es möglich, alle Laderäume 11 der Werfereinrichtung 9 mit einem Munitionsbehälter 40 oder einem Transportbehälter 20 zu bestücken.

Die Außenkontur des Transportbehälters 20 ist an die Innenkontur des Laderaums 11 angepasst, um einen möglichst großen Bereich des Laderaums 11 zum Verstauen von Ausrüstungsgegenständen nutzbar zu machen. Um den Austausch des Munitionsbehälters 40 gegen einen Transportbehälter 20 zu ermöglichen, ist die Außenkontur des Transportbehälters 20 im Wesentlichen an die Außenkontur eines Munitionsbehälter 40 angepasst. Der Transportbehälter 20 weist im Wesentlichen dieselben Abmaße wie ein Munitionsbehälter 40 auf. Der Transportbehälter 20 weist eine Außenhülle 23 aus einem Leichtmetall auf, welche den Stauraum 21 regendicht und staubdicht verschließt. Alternativ kann die Außenhülle 23 auch aus einem anderen Material, z. B. einem Verbundwerkstoff bestehen. Die Außenhülle 23 ist ferner quaderförmig ausgebildet, so dass der Transportbehälter 20 stapelbar ist. Bei dem Ausführungsbeispiel gemäß Fig. 4 weist die Außenhülle 23 an einer Stirnseite der Stauraums 21 eine Schutzwand 24 auf, welche in einer in den Höhenrichtteil 10 eingeführten Stellung in die Flugrichtung der Werfermunitionskörper gerichtet ist. Durch die Schutzwand 24 können die in dem Stauraum 21 verstauten Ausrüstungsgegenstände gegen die Einwirkung des Abgasstrahls eines startenden Werfermunitionskörpers geschützt werden.

Wie der Darstellung in der Fig. 4 und Fig. 5 ferner zu entnehmen ist, ist der Stauraum 21 im Inneren des Transportbehälters 20 mittels mehrerer innerhalb des Transportbehälters 20 angeordneter Trennwände 22 in die Stauraumbereiche 21.1, 21.2, 21.3 untergliedert. Durch die Trennwände 22 kann das Verrutschen von Ausrüstungsgegenständen von einem Bereich 21.1, 21.2, 21.3 in einen anderen Bereich 21.1, 21.2, 21.3 beim gemeinsamen Richten des Höhenrichtteils 10 und des Transportbehälters 20 und/oder beim Verladen des Transportbehälters 20 verhindert werden.

Die Außenhülle 23 des Transportbehälters 20 weist ferner im Bereich zwischen den Stirnseiten des Transportbehälters 20 mehrere Öffnungen 25.1 auf, welche durch Türen verschließbar sind. Gemäß dem ersten Ausführungsbeispiel nach Fig. 4 ist jedem Stauraumabschnitt 21.1-21.3 eine verschließbare Öffnung 25.1 zugeordnet, so dass der Zugang zu allen Abschnitten des Stauraums ermöglicht wird. Wenn der Transportbehälter 20 in den Laderaum 11 der Werfereinrichtung 9 eingebracht ist, sind die Öffnungen 25.1 im Bereich zwischen den Stirnseiten des Transportbehälters 20 nicht zugänglich. Daher ist an einer Stirnseite des Transportbehälters 20 eine weitere Öffnung 25.2 mit einer Tür angeordnet, welche auch dann geöffnet werden kann, wenn der Transportbehälter 20 sich in der Werfereinrichtung 9 befindet. Die Öffnung 25.2 weist in einer Stellung des Transportbehälters 20, in welcher er in die Werfereinrichtung 9 eingebracht ist, in Richtung des offenen, rückwärtigen Endes der Werfereinrichtung 9, vgl. Fig. 3.

An der Oberseite des Transportbehälters 20 ist ferner ein Verbindungselement 28 angeordnet, welches zum Verladen mit einem Verbindungselement der Verladevorrichtung 12 des Fahrzeugs 1 verbunden werden kann. Das Verbindungselement 28 ist als Öse ausgebildet, die durch eine Stange an der Außenkontur 23 des Transportbehälters 20 gebildet wird. In die Öse 28 kann ein Haken der Verladevorrichtung 12 eingreifen, um den Transportbehälter 20 aufzunehmen.

Die Verbindung der Verladevorrichtung 12 mit dem Verbindungselement 28 ist in der Fig. 6 beispielhaft dargestellt, wobei der Transportbehälter 20 durch einen Munitionsbehälter 40 ausgetauscht ist. Beim Verladen des Transportbehälters 20 mit der Verladevorrichtung 12, insbesondere beim Entfernen aus dem Höhenrichtteil 10, kann es aufgrund der Beladung des Transportbehälters 20 mit Ausrüstungsgegenständen zu einem Verkippen des Transportbehälters 20 kommen. Um den Transportbehälter 20 auszubalancieren, ist eine Einstellvorrichtung 26 zur Einstellung des Schwerpunkts 20 vorgesehen, vgl. Fig. 4. Die Einstellvorrichtung 26 weist ein bewegbares Justiergewicht auf, welches entlang einer Längsrichtung L des Transportbehälters 20 bewegbar ist. Durch das Justiergewicht kann ein Gegengewicht zu dem Gewicht der in dem Transportbehälter 20 verstauten Ausrüstungsgegenstände bereitgestellt werden. Gemäß dem in der Fig. 4 dargestellten Ausführungsbeispiel ist das Justiergewicht entlang einer an einer Seitenwand des Transportbehälters 20 angeordneten Führung 27 linear bewegbar. Optional kann das Justiergewicht mittels eines Antriebs bewegbar sein.

In der Fig. 5 ist ein zweites Ausführungsbeispiel eines Transportbehälters 20 dargestellt. Der Transportbehälter 20 des zweiten Ausführungsbeispiels weist insgesamt sieben Öffnungen 25.1, 25.2 auf, welche über entsprechende Türen verschließbar sind. Die Öffnungen 25.1 im Bereich zwischen den Stirnseiten des Transportbehälters 20 sind jeweils paarweise gegenüberliegend angeordnet. Im Gegensatz zu dem Transportbehälter 20 des ersten Ausführungsbeispiels ist bei dem Transportbehälter 20 des zweiten Ausführungsbeispiels die Einstellvorrichtung 26 zur Einstellung des Schwerpunkts des Transportbehälters 20 im Bereich des Bodens Transportbehälters 20 angeordnet. Sie weist ebenfalls ein Justiergewicht auf, welches entlang einer Führung linear bewegbar ist. Ein weiterer Unterschied zu dem Transportbehälter 20 ersten Ausführungsbeispiels besteht darin, dass der Transportbehälter 20 des zweiten Ausführungsbeispiels insgesamt vier Transportösen 29 aufweist, welche an den Kanten des Transportbehälters 20 angeordnet sind. Über die Transportösen 29 kann das Verladen des Transportbehälters 20 ermöglicht werden.

Gemäß einer Weiterbildung der vorstehend genannten Ausführungsbeispiele ist in dem Transportbehälter 20 eine elektrische Ausrüstung angeordnet, welche mit der Werfereinrichtung 9 über eine Schnittstelle verbindbar ist. Über eine elektrische Ausrüstung können an dem Fahrzeug 1 und/oder der Werfereinrichtung 9 zusätzliche Funktionen bereitgestellt werden. Beispielsweise kann der Transportbehälter 20 einen Stromerzeuger, eine so genannte "Auxiliary Power Unit" aufweisen, über welche zusätzliche elektrische Energie für das Fahrzeug 1 und/oder die Werfereinrichtung 9 bereitgestellt werden kann. Die Verbindung der elektrischen Ausrüstung mit der Werfereinrichtung 9 kann über eine Schnittstelle erfolgen, welche manuell verbunden wird. Die Schnittstelle kann identisch mit einer Schnittstelle zur Verbindung von Munitionsbehältern 40 ausgebildet sein.

Nachfolgend soll anhand der Darstellung in der Fig. 6 das Verfahren zum Verstauen von Ausrüstungsgegenständen an einer Werfereinrichtung 9 eines militärischen Fahrzeugs 1 erläutert werden, die einen in Elevation richtbaren Höhenrichtteil 10 aufweist.

Zunächst werden die Ausrüstungsgegenstände, z. B. die persönliche Schutzausrüstung der Fahrzeugbesatzung, Werkzeuge, Vorratsrationen, Zubehör oder Geräte durch eine Öffnung 25.1, 25.2 in den Stauraum 21 des Transportbehälters 20 eingebracht. Der Transportbehälter 20 kann anstelle eines in der Fig. 6 dargestellten Munitionsbehälters 40 auf einem Verladefahrzeug 42 zu dem militärischen Fahrzeug 1 verbracht werden, in welchem die Ausrüstungsgegenstände verstaut werden sollen.

Abhängig von der Beladung des Transportbehälters 20 kann der Schwerpunkt des Transportbehälters 20 mit der vorstehend beschriebenen Einstellvorrichtung 26 eingestellt werden. Bevorzugt wird der Schwerpunkt des mit Ausrüstungsgegenständen gefüllten Transportbehälters 20 derart eingestellt, dass er im Wesentlichen dem Schwerpunkt eines leeren Transportbehälters 20 entspricht. Durch die Einstellung des Schwerpunkts kann ein Verkippen des Transportbehälters 20 beim Verladen und/oder ein Verkanten des Transportbehälters 20 beim Einbringen in den Laderaum 11 verhindert werden.

In einem weiteren Schritt wird ein Haken der als Kran ausgebildeten Verladevorrichtung 12 mit dem Verbindungselement 28 des Transportcontainers 20 verbunden. Der Transportbehälter 20 wird durch die Verladevorrichtung 12 in die Höhe gezogen und auf einen Ladeschacht 11 der Werfereinrichtung 9 ausgerichtet. In einem weiteren Schritt wird der Transportbehälter 20 dann in den Laderaum 11 eingeführt. Um den Transportbehälter 20 in dem Ladeschacht 11 festzulegen, wird der Transportbehälter 20 abschließend mit einer mechanischen Verriegelungseinrichtung der Werferanlage 9 verriegelt.

Der in dem Laderaum befindliche Transportbehälter 20 erhöht die Stabilität der Werfereinrichtung 9 gegen Verwindungen, insbesondere dann, wenn nur ein Laderaum 11 der Werferanlage 9 mit einem Munitionsbehälter 40 bestückt ist.

Während sich der Transportbehälter 20 im Laderaum 11 des Höhenrichtteils 10 befindet, können Ausrüstungsgegenstände durch die hintere Öffnung 25.2 in den Stauraum 21 eingebracht und entnommen werden, wodurch sich die Gewichtsverteilung im Stauraum 21 des Transportbehälters 20 verändern kann. Um dem Verkanten beim Entfernen des Transportbehälters 20 aus dem Laderaum 11 aufgrund einer veränderten Gewichtsverteilung zu entgegenzuwirken, kann der Schwerpunkt des Transportbehälters 20 mittels der Einstellvorrichtung 26 eingestellt werden, während sich der Transportbehälter 20 im Laderaum 11 befindet.

Zum Entfernen des Transportbehälters 20 aus dem Laderaum wird zunächst die Verriegelung der Werfereinrichtung 9 gelöst. Nach dem Entriegeln des Transportbehälters 20 kann dieser durch die Verladevorrichtung 12 aus dem Laderaum 11 herausgezogen und dann an dem Haken der Verladevorrichtung 12 herabgelassen werden.

Der vorstehend beschriebene Transportbehälter 20 kann derart an der Werfereinrichtung 9 angeordnet werden, dass er gemeinsam mit dem Höhenrichtteil 10 der Werfereinrichtung 9 in Elevation und/oder in Azimut richtbar ist. An dem Höhenrichtteil 10 können Ausrüstungsgegenstände verstaut werden, ohne den Richtbereich, in welchem die Werfereinrichtung 9 gerichtet werden kann, zu beeinflussen.

### Bezugszeichen:

- 1: militärisches Fahrzeug
- 2: Fahrgestell
- 3: Führerhaus
- 4: Kette
- 5: Richtvorrichtung
- 9: Werfereinrichtung
- 10: Höhenrichtteil
- 11: Laderaum
- 12: Verladevorrichtung
- 20: Transportbehälter
- 21: Stauraum
- 21.1-21.3: Stauraumbereich
- 22: Trennwand
- 23: Außenhülle
- 24: Schutzwand
- 25: Öffnung
- 26: Einstellvorrichtung
- 27: Führung
- 28: Verbindungselement
- 29: Verbindungselement
- 30: Verladefahrzeug
- 40: Munitionsbehälter
- 41: Lagerplatz

## Patentansprüche

1. Militärisches Fahrzeug mit einer Werfereinrichtung (9), die einen in Elevation richtbaren Höhenrichtteil (10) mit einem Laderaum (11) aufweist, in welchen Werfermunitionskörper einbringbar sind, **dadurch gekennzeichnet, dass** an dem Höhenrichtteil (10) ein Transportbehälter (20) mit einem Stauraum (21) zum Verstauen von Ausrüstungsgegenständen angeordnet ist, wobei der Transportbehälter (20) derart ausgebildet ist, dass er in dem Laderaum (11) aufnehmbar ist.

2. Militärisches Fahrzeug nach Anspruch 1, **dadurch gekennzeichnet, dass** der Höhenrichtteil (10) mindestens zwei Laderäume (11) für Werfermunitionskörper aufweist, wobei der Transportbehälter (20) in einem der Laderäume (11) aufnehmbar ist.

3. Militärisches Fahrzeug nach Anspruch 2, **dadurch gekennzeichnet, dass** die Außenkontur des Transportbehälters (20) an die Innenkontur des Laderaums (11) angepasst ist.

4. Militärisches Fahrzeug nach einem der vorhergehenden Ansprüche, **gekennzeichnet durch** eine an dem Fahrzeug (1), insbesondere an dem Höhenrichtteil (9), angeordnete Verladevorrichtung (12) zum Verladen des Transportbehälters (20).

5. Militärisches Fahrzeug nach einem der vorhergehenden Ansprüche, **dadurch gekennzeichnet, dass** der Transportbehälter (20) eine insbesondere quaderförmige Außenhülle (23) zur Begrenzung des Stauraums (21) aufweist.

6. Militärisches Fahrzeug nach einem der vorhergehenden Ansprüche, **dadurch gekennzeichnet, dass** der Transportbehälter (20) eine Schutzwand (24), insbesondere an einer Stirnseite des Stauraums (21), zum Schutz des Stauraums (21) vor einem Abgasstrahl der Werfermunitionskörper aufweist.

7. Militärisches Fahrzeug nach einem der vorhergehenden Ansprüche, **gekennzeichnet durch** eine in dem Transportbehälter (20) angeordnete Trennwand (22) zur Unterteilung des Stauraums (21).

8. Militärisches Fahrzeug nach einem der vorhergehenden Ansprüche, **dadurch gekennzeichnet, dass** der Transportbehälter (20) eine schließbare Öffnung (25.1, 25.2) aufweist.

9. Militärisches Fahrzeug nach einem der vorhergehenden Ansprüche, **dadurch gekennzeichnet, dass** der Transportbehälter (20) ein, insbesondere an einer Oberseite des Stauraums (21) angeordnetes, Verbindungselement (28) zur Verbindung mit der Verladevorrichtung (12) aufweist.

10. Militärisches Fahrzeug nach einem der vorhergehenden Ansprüche, **dadurch gekennzeichnet, dass** der Transportbehälter (20) eine Einstellvorrichtung (26) zur Einstellung des Schwerpunkts des Transportbehälters (20) aufweist.

11. Militärisches Fahrzeug nach Anspruch 10, **dadurch gekennzeichnet, dass** die Einstellvorrichtung (26) ein bewegbares Justiergewicht aufweist.

12. Militärisches Fahrzeug nach einem der vorhergehenden Ansprüche, **dadurch gekennzeichnet, dass** in dem Transportbehälter (20) eine elektrische Ausrüstung, insbesondere ein Stromerzeuger, angeordnet ist, welche mit der Werfereinrichtung (9) über eine Schnittstelle verbindbar ist.

13. Verfahren zum Verstauen von Ausrüstungsgegenständen an einer Werfereinrichtung (9) eines militärischen Fahrzeugs (1), die einen in Elevation richtbaren Höhenrichtteil (10) mit einem Laderaum (11) aufweist, in welchen Werfermunitionskörper einbringbar sind, **dadurch gekennzeichnet, dass** ein Transportbehälter (20), der einen Stauraum (21) zum Verstauen von Ausrüstungsgegenständen aufweist, an dem Höhenrichtteil (10) angeordnet wird, wobei der Transportbehälter (20) in dem Laderaum (11) aufgenommen wird.

14. Verfahren nach Anspruch 13, **dadurch gekennzeichnet, dass** der Schwerpunkt des Transportbehälters (20) mit einer Einstellvorrichtung (26) eingestellt wird.

## Claims

1. Military vehicle with a launcher means (9) which has a height-adjustable part (10) that can be levelled in elevation with a storage space (11), in which launcher ammunition elements can be arranged, **characterised in that** a transport container (20) with a stowage area (21) for stowing equipment is arranged on the height-adjustable part (10), whereby the transport container (20) is so designed that it can be accommodated in the storage space (11).

2. Military vehicle according to claim 1, **characterised in that** the height-adjustable part (10) has at least two storage spaces (11) for launcher ammunition elements, whereby the transport container (20) can be accommodated in one of the storage spaces (11).

3. Military vehicle according to claim 2, **characterised in that** the outer contour of the transport container (20) is adapted to the inner contour of the storage space (11).

4. Military vehicle according to any one of the preceding claims, **characterised by** a loading device (12), arranged on the vehicle (1), particularly on the height-adjustable part (9), to load the transport container (20).

5. Military vehicle according to any one of the preceding claims, **characterised in that** the transport container (20) has in particular a rectangular prismatic outer shell (23), which delimits the stowage area (21).

6. Military vehicle according to any one of the preceding claims, **characterised in that** the transport container (20) has a protective wall (24), in particular at an end face of the stowage area (21), to protect the stowage area (21) from the jet blast of the ammunition launcher elements.

7. Military vehicle according to any one of the preceding claims, **characterised by** a separating wall (22), arranged in the transport container (20), to sub-divide the stowage area (21).

8. Military vehicle according to any one of the preceding claims, **characterised in that** the transport container (20) has a closable opening (25.1, 25.2).

9. Military vehicle according to any one of the preceding claims, **characterised in that** the transport container (20) has a connection element (28), arranged in particular on an upper side of the stowage area (21), to connect to the loading device (12).

10. Military vehicle according to any one of the preceding claims, **characterised in that** the transport container (20) has an adjusting device (26) enabling the centre of gravity of the transport container (20) to be adjusted.

11. Military vehicle according to claim 10, **characterised in that** the adjusting device (26) has a movable adjusting weight.

12. Military vehicle according to any one of the preceding claims, **characterised in that** an electrical fitting, in particular a power generator, is arranged in the transport container (20), which can be connected via an interface to the launcher means (9).

13. Method for stowing equipment on a launcher means (9) of a military vehicle (1) which has a height-adjustable part (10) that levelled in elevation with a storage space (11), in which ammunition launcher elements can be accommodated, **characterised in that** a transport container (20) which has a stowage area (21) to stow equipment is arranged on the height-adjustable part (10), whereby the transport container (20) is accommodated in the storage space (11).

14. Method according to claim 13, **characterised in that** the centre of gravity of the transport container (20) can be adjusted by means of an adjusting device (26).

## Revendications

1. Véhicule militaire équipé d'un dispositif lanceur (9), qui présente une partie de pointage en hauteur (10) pouvant être orientée en élévation pourvue d'un espace de chargement (11), dans lequel des corps de munition de lanceur peuvent être introduits, **caractérisé en ce qu'**un contenant de transport (20) pourvu d'un espace de stockage (21) servant à stocker des objets d'équipement est disposé au niveau de la partie de pointage en hauteur (10), dans lequel le contenant de transport (20) est réalisé de telle manière qu'il peut être logé dans l'espace de chargement (11).

2. Véhicule militaire selon la revendication 1, **caractérisé en ce que** la partie de pointage en hauteur (10) présente au moins deux espaces de chargement (11) destinés à des corps de munition de lanceur, sachant que le contenant de transport (20) peut être logé dans l'un des espaces de chargement (11).

3. Véhicule militaire selon la revendication 2, **caractérisé en ce que** le contour extérieur du contenant de transport (20) est adapté au contour intérieur de l'espace de chargement (11).

4. Véhicule militaire selon l'une quelconque des revendications précédentes, **caractérisé par** un dispositif de transfert de chargement (12), disposé au niveau du véhicule (1), en particulier au niveau de la partie de pointage en hauteur (9), servant à transférer le chargement du contenant de transport (20).

5. Véhicule militaire selon l'une quelconque des revendications précédentes, **caractérisé en ce que** le contenant de transport (20) présente une enveloppe extérieure (23) en particulier de forme carrée servant à délimiter l'espace de stockage (21).

6. Véhicule militaire selon l'une quelconque des revendications précédentes, **caractérisé en ce que** le contenant de transport (20) présente une paroi de protection (24), en particulier au niveau d'un côté frontal de l'espace de stockage (21), servant à protéger l'espace de stockage (21) des gaz d'échappement des corps de munition de lanceur.

7. Véhicule militaire selon l'une quelconque des revendications précédentes, **caractérisé par** une paroi de séparation (22) disposée dans le contenant de transport (20), servant à diviser l'espace de stockage (21).

8. Véhicule militaire selon l'une quelconque des revendications précédentes, **caractérisé en ce que** le contenant de transport (20) présente une ouverture (25.1, 25.2) pouvant être fermée.

9. Véhicule militaire selon l'une quelconque des revendications précédentes, **caractérisé en ce que** le contenant de transport (20) présente un élément de liaison (28), disposé en particulier au niveau d'un côté supérieur de l'espace de stockage (21), destiné à être relié au dispositif de transfert de chargement (12).

10. Véhicule militaire selon l'une quelconque des revendications précédentes, **caractérisé en ce que** le contenant de transport (20) présente un dispositif de réglage (26) servant à régler le centre de gravité du contenant de transport (20).

11. Véhicule militaire selon la revendication 10, **caractérisé en ce que** le dispositif de réglage (26) présente un poids d'ajustage pouvant être déplacé.

12. Véhicule militaire selon l'une quelconque des revendications précédentes, **caractérisé en ce qu'**est disposé, dans le contenant de transport (20), un équipement électrique, en particulier un générateur de courant, qui peut être relié, par l'intermédiaire d'une interface, au dispositif lanceur (9).

13. Procédé servant à stocker des objets d'équipement au niveau d'un dispositif lanceur (9) d'un véhicule militaire (1), qui présente une partie de pointage en hauteur (10) pouvant être orientée en élévation, pourvue d'un espace de chargement (11), dans lequel des corps de munition de lanceur peuvent être introduits, **caractérisé en ce qu'**un contenant de transport (20), qui présente un espace de stockage (21) servant à stocker des objets d'équipement, est disposé au niveau de la partie de pointage en hauteur (10), dans lequel le contenant de transport (20) est logé dans l'espace de chargement (11).

14. Procédé selon la revendication 13, **caractérisé en ce que** le centre de gravité du contenant de transport (20) est réglé à l'aide d'un dispositif de réglage (26).
